# EUROPEAN PATENT APPLICATION

(11) **EP 4 422 021 A1**
(43) Date of publication of application: **28.08.2024**
(21) Application number: 23182313.9
(22) Date of filing: 29.06.2023
(51) Int. Cl.: H02J 7/00, G06F 1/16, H02J 7/04, H02J 50/00

(54) **MOBILE CHARGING APPARATUS, WEARABLE APPARATUS, AND APPARATUS CONTROL METHOD AND STORAGE MEDIUM**

(30) Priority: 21.02.2023 CN 202310188665
(71) Applicant: Beijing Xiaomi Mobile Software Co., Ltd., Beijing 100085 (CN)
(72) Inventor: GAO, Shan, Beijing 100085 (CN); ZHANG, Yingmei, Beijing 100085 (CN); ZHU, Heming, Beijing 100085 (CN)
(74) Representative: dompatent von Kreisler Selting Werner - Partnerschaft von Patent- und Rechtsanwälten mbB

(57) **Abstract**

The disclosure provides a mobile charging apparatus, a wearable apparatus, and an apparatus control method and storage medium. The wearable apparatus (1) includes the mobile charging apparatus (12). The mobile charging apparatus (12) can be detachably assembled to a wearable apparatus body (11), so as to be assembled and fitted to the wearable apparatus body (12) for charging when the wearable apparatus body (11) needs to be charged, and to be separated from the wearable apparatus body (11) when the wearable apparatus body (11) does not need to be charged.

## Description

### TECHNICAL FIELD

The disclosure relates to the field of electronic technology, and particularly relates to a mobile charging apparatus, a wearable apparatus, and an apparatus control method and storage medium.

### BACKGROUND

To optimize the use experience of smart watches, smart bracelets, smart glasses and other wearable apparatuses, the wearable apparatuses should be miniaturized and light-weighted, which causes the battery capacity to be compressed to the limit. Moreover, the battery life of the wearable apparatuses is affected by the increase in their internal functions and power consumption.

In the related technology, all the wearable apparatuses use rechargeable batteries. When the battery is dead, the wearable apparatus needs to be taken off and recharged with a special charging apparatus.

### SUMMARY

The disclosure provides a mobile charging apparatus, a wearable apparatus, and an apparatus control method and storage medium, to solve the related technical problems.

A first aspect of the disclosure provides a mobile charging apparatus, used in cooperation with a wearable apparatus body.

The mobile charging apparatus includes a body structure and a charging source arranged on the body structure, wherein when the mobile charging apparatus is assembled and fitted to the wearable apparatus body, the mobile charging apparatus is detachably assembled to the wearable apparatus body by means of the body structure, and the charging source is electrically connected to a power source of the wearable apparatus body; and
the body structure covers at least part of a middle frame and/or part of a screen of the wearable apparatus body, such that at least part of the screen exposed out of the body structure serves as a display control interaction region, wherein the display control interaction region is configured to implement a preset display interaction function.

Optionally, the body structure includes a first portion and a second portion; and the first portion covers at least part of the middle frame circumferentially, and the second portion covers a part of the screen.

Optionally, the mobile charging apparatus includes a charging contact electrically connected to the charging source, wherein the charging contact is arranged on an inner surface of the first portion, and the charging contact is aligned with a connection contact arranged on the middle frame.

Optionally, the body structure includes an accommodating structure protruding from an outer surface of the first portion; and the charging source is assembled in an accommodating cavity defined by the accommodating structure, the inner surface includes an alignment region corresponding to the accommodating cavity in position, and the charging contact is arranged in the alignment region.

Optionally, the body structure includes a preset region adjacent to the charging contact, and the preset region is provided with a first magnetic attraction member; and when the mobile charging apparatus is assembled and fitted to the wearable apparatus body, the first magnetic attraction member is fixed to the wearable apparatus body in an attracted manner.

Optionally, the charging contact includes a first contact and a second contact, and the preset region is arranged between the first contact and the second contact.

Optionally, the mobile charging apparatus includes a preset region adjacent to the charging contact, wherein the preset region is provided with a first clamping portion; and when the mobile charging apparatus is assembled and fitted to the wearable apparatus body, the first clamping portion is fixed to the wearable apparatus body in a clamping manner.

Optionally, the charging source includes a wireless charging coil arranged on the body structure; the power source includes a wireless power supply coil arranged on the wearable apparatus body; and when the mobile charging apparatus is assembled and fitted to the wearable apparatus body, the wireless charging coil is fitted to the wireless power supply coil in an alignment manner.

Optionally, the wireless charging coil is arranged in a third portion of the body structure corresponding to a rear housing of the wearable apparatus body in position.

Optionally, a side of the third portion facing the wearable apparatus body is provided with a metal layer, and a side of the third portion facing away from the wearable apparatus body is provided with a leather layer; and the wireless charging coil is arranged between the metal layer and the leather layer.

Optionally, the body structure includes a first portion fitted to the middle frame and a second portion fitted to the screen, and the third portion has a thickness less than or equal to that of the first portion and the second portion.

Optionally, the third portion is provided with a third magnetic attraction member, and the rear housing is provided with a fourth magnetic attraction member corresponding to the third magnetic attraction member in position; and when the mobile charging apparatus is assembled to the wearable apparatus body, the third magnetic attraction member is fixed to the fourth magnetic attraction member in an attracted manner.

A second aspect of the disclosure provides a wearable apparatus, including a wearable apparatus body and any one of the mobile charging apparatuses according to the first aspect. The mobile charging apparatus is detachably assembled to the wearable apparatus body by means of a body structure. The wearable apparatus body includes a power source, and a charging source is electrically connected to the power source.

Optionally, the wearable apparatus body includes a screen, and the screen includes a first display control region and a second display control region; and the body structure covers one of the first display control region and the second display control region, and the other one of the first display control region and the second display control region is exposed out of the mobile charging apparatus.

A third aspect of the disclosure provides an apparatus control method, applied to any one of the wearable apparatuses according to the second aspect, and including:
receiving a control signal that a power source is connected to or disconnected from a charging source; and
sending a mode switching instruction according to the control signal, wherein the mode switching instruction includes switching of a display control region and/or switching of on and off of at least one function module of the wearable apparatus.

Optionally, the apparatus control method further includes:
adjusting display content according to the mode switching instruction, wherein the display content is associated with a display region and the started function module.

A fourth aspect of the disclosure provides an apparatus control device, applied to any one of the wearable apparatuses according to the second aspect, and including:
a reception unit configured to receive a control signal that a power source is connected to or disconnected from a charging source; and
a control unit configured to send a mode switching instruction according to the control signal, wherein the mode switching instruction includes switching of a display control region and/or switching of on and off of at least one function module of the wearable apparatus.

Optionally, the apparatus control device further includes:
an adjustment unit configured to adjust display content according to the mode switching instruction, wherein the display content is associated with a display region and the started function module.

A fifth aspect of the disclosure further provides a computer-readable storage medium, storing a computer instruction, wherein the instruction implements steps of any apparatus control method described according to the third aspect when executed by a processor.

The technical solution provided in the disclosure at least has the beneficial effects as follows:
the mobile charging apparatus of the disclosure can be detachably assembled to a wearable apparatus body by means of a body structure, so as to be assembled and fitted to the wearable apparatus body for charging when the wearable apparatus body needs to be charged, and to be separated from the wearable apparatus body when the wearable apparatus body does not need to be charged. The mobile charging apparatus above includes a charging source, and thus can be connected to a receptacle without a wire and a plug, and the mobile charging apparatus can be assembled to the wearable apparatus body in a wearing state of the wearable apparatus body, to complete charging, such that complex operation of taking off the wearable apparatus body in a charging process is avoided. Furthermore, the body structure does not fully cover the screen in an assembly process, so as to reduce an operation influence of interaction by a user by means of the screen, and improve convenience of charging operation and user experience.

It is to be understood that both the foregoing general description and the following detailed description are illustrative and interpretative and are not restrictive of the disclosure.

### BRIEF DESCRIPTION OF THE DRAWINGS

In order to explain the technical solutions in examples of the disclosure more clearly, the accompanying drawings required in the description of the examples will be described below briefly. Apparently, the accompanying drawings in the following description show merely some examples of the disclosure, and other drawings can be derived from these accompanying drawings by those of ordinary skill in the art without creative efforts.
Fig. 1 is a schematic diagram of a sectional structure of a wearable apparatus according to an example of the disclosure;
Fig. 2 is a schematic diagram of a solid structure of a wearable apparatus according to an example of the disclosure;
Fig. 3 is a schematic diagram of a perspective structure of a wearable apparatus according to an example of the disclosure;
Fig. 4 is a schematic diagram of a sectional structure of a wearable apparatus according to another example of the disclosure;
Fig. 5 is a schematic diagram of a sectional structure of a third portion according to an example of the disclosure;
Fig. 6 is a schematic diagram of a sectional structure of a third portion according to another example of the disclosure;
Fig. 7 is a flowchart of an apparatus control method according to an example of the disclosure;
Fig. 8 is a structural block diagram of an apparatus control device according to an example of the disclosure; and
Fig. 9 is a block diagram of a device for controlling an apparatus according to an example of the disclosure.

### DETAILED DESCRIPTION

Description will be made in detail to examples here, instances of which are illustrated in the accompanying drawings. When the following description relates to the accompanying drawings, the same numbers in different accompanying drawings refer to the same or similar elements unless otherwise indicated. The embodiments described in the following examples do not represent all embodiments consistent with the disclosure. Rather, they are merely instances of device and methods consistent with some aspects of the disclosure.

The term used in the disclosure is for the purpose of describing particular examples merely and is not intended to restrict the disclosure. Unless otherwise defined, technical or scientific terms used in the disclosure should have ordinary meaning as understood by those of ordinary skill in the art to which the disclosure belongs. "First", "second" and similar words used in the disclosure do not indicate any order, quantity, or importance, but are only used for distinguishing different components. Similarly, "a", "an" and similar words do not indicate a quantity limitation, but indicate at least one, and if only "one" is to be indicated, additional explanation will be provided. "A plurality of" or "several" means two or more. Unless otherwise stated, "front", "rear", "lower" and/or "upper", "top", "bottom" and similar words are merely for ease of description, and are not limited to one position or one spatial orientation. "Comprise", "include" and similar words are intended to mean that an element or item in front of the "comprise", "include" and similar words encompasses elements or items that are listed behind "comprise", "include" and similar words and their equivalents, but do not exclude other elements or items. "Connection", "connected" and similar words are not limited to a physical or mechanical connection, but can include a direct or indirect electrical connection.

To optimize the use experience of smart watches, smart bracelets, smart glasses and other wearable apparatuses, the wearable apparatuses should be miniaturized and light-weighted, which causes the battery capacity to be compressed to the limit. Moreover, the battery life of the wearable apparatuses is affected by the increase in their internal functions and power consumption. In the related technology, all the wearable apparatuses use rechargeable batteries. When the battery is dead, the wearable apparatus needs to be taken off and recharged with a special charging apparatus, but frequent operation of "wear-take-off-charge" causes use inconvenience and affects the user experience.

The disclosure provides a mobile charging apparatus 12, used in cooperation with a wearable apparatus body 11. The mobile charging apparatus 12 includes a body structure 121 and a charging source 122 arranged on the body structure 121. When the mobile charging apparatus 12 is assembled and fitted to the wearable apparatus body 11, the mobile charging apparatus 12 is detachably assembled to the wearable apparatus body 11 by means of the body structure 121, and the charging source 122 is electrically connected to a power source 111 of the wearable apparatus body 11. The body structure 121 covers at least part of a middle frame 113 and/or part of a screen 112 of the wearable apparatus body 11, such that at least part of the screen 112 exposed out of the body structure 121 serves as a display control interaction region. The display control interaction region is at least configured to implement a preset display interaction function.

It is to be noted that the above display control interaction region may be used for a preset display interaction function, for instance, functions of weather display, time display, and touch control interaction, etc. The display control interaction region may be part of the screen 112 or the entire screen 112.

Since the mobile charging apparatus 12 can be detachably assembled to a wearable apparatus body 11 by means of a body structure 121, so as to be assembled and fitted to the wearable apparatus body 11 for charging when the wearable apparatus body 11 needs to be charged, and to be separated from the wearable apparatus body 11 when the wearable apparatus body does not need to be charged. The mobile charging apparatus 12 above includes a charging source 122, and thus there is no need to connect the receptacle and the wearable apparatus body 11 via a wire and a plug, and the mobile charging apparatus 12 may be assembled to the wearable apparatus body 11 in a wearing state of the wearable apparatus body 11, to complete charging, such that complex operation of taking off the wearable apparatus body 11 in a charging process is avoided. Furthermore, the body structure 121 does not fully cover the screen 112 in an assembly process, so as to reduce an operation influence of interaction by a user by means of the screen 112 and improve convenience of charging operation and user experience.

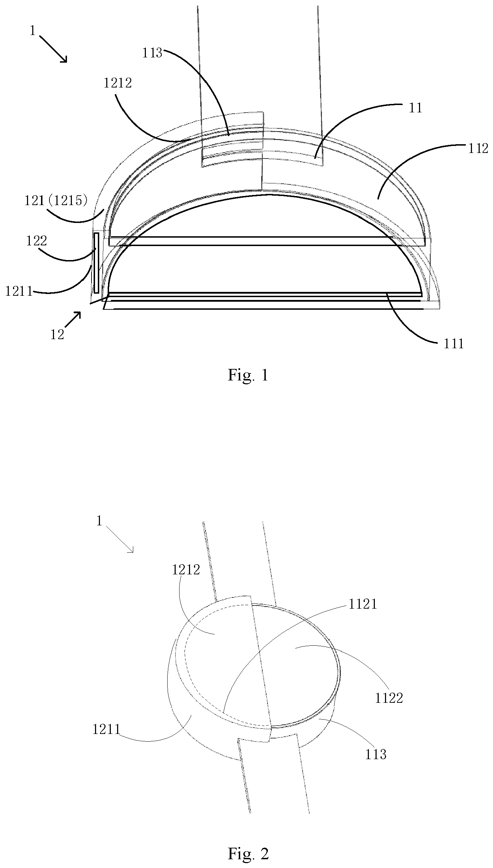

The disclosure provides a wearable apparatus. Fig. 1 is a schematic diagram of a sectional structure of a wearable apparatus according to an example of the disclosure. As shown in Fig. 1, the wearable apparatus 1 includes a wearable apparatus body 11 and a mobile charging apparatus 12. The wearable apparatus body 11 includes a power source 111, a middle frame 113 and a screen 112 assembled to the middle frame 113. The mobile charging apparatus 12 is detachably assembled to the wearable apparatus body 11. The mobile charging apparatus 12 includes a body structure 121 and a charging source 122 arranged on the body structure 121. The body structure 121 is detachably connected to the wearable apparatus body 11, and the body structure 121 covers at least part of the middle frame 113 and/or part of the screen 112. The charging source 122 is electrically connected to the power source 111.

Since the wearable apparatus 1 includes the mobile charging apparatus 12. The mobile charging apparatus 12 may be detachably assembled to a wearable apparatus body 11, so as to be assembled and fitted to the wearable apparatus body 11 for charging when the wearable apparatus body 11 needs to be charged, and to be separated from the wearable apparatus body 11 when the wearable apparatus body does not need to be charged. The above mobile charging apparatus 12 includes a charging source 122, and there is no need to connect a receptacle and the wearable apparatus body 11 via a wire and a plug, and the mobile charging apparatus 12 may be assembled to the wearable apparatus body 11 in a wearing state of the wearable apparatus body 11, to complete charging, such that complex operation of taking off the wearable apparatus body 11 in a charging process is avoided. After being assembled to the wearable apparatus body 11, the body structure 121 of the mobile charging apparatus 12 includes three fitting forms that the body structure 121 is fitted to at least part of the middle frame 113, is fitted to part of the screen 112, or fitted to both at least part of the middle frame 113 and part of the screen 112, so as to reduce an operation influence of interaction by a user by means of the screen 112 and improve convenience of charging operation and a user experience.

In some examples, as shown in Fig. 1, the body structure 121 includes a first portion 1211 fitted to at least part of the middle frame 113, and a connection structure arranged on the first portion 1211. The connection structure may be fixed to an edge of the middle frame 113 in a clamping manner. The first portion 1211 of the mobile charging apparatus 12 is fitted to at least part of the middle frame 113, such that the assembly reliability of the mobile charging apparatus 12 can be improved. That is, the mobile charging apparatus 12 is assembled and fixed by means of clamping of the connection structure and the middle frame 113, so as to avoid the coverage of the screen 112 by the connection structure and an influence on the display control function of the wearable apparatus 1. The connection structure may be of a groove structure, and is fixed by clamping of the groove structure and an edge of the middle frame 113 in a thickness direction.

It is to be noted that the first portion 1211 may partially or entirely cover the middle frame 113 in a circumferential direction. When the first portion 1211 covers part of the middle frame 113, a half circumference or 1/3 circumference of the middle frame 113 may be covered, which is not limited in the disclosure.

In some other examples, as shown in Fig. 2, the body structure includes a second portion 1212 covering part of the screen 112, and a connection structure arranged on the second portion 1212, and the second portion 1212 may be lapped over the screen. The connection structure may be fixed to the middle frame 113 in a clamping manner, and may also be fixed to the screen 112 or the middle frame 113 by means of a magnetic attraction structure, such that the external attractiveness of the wearable apparatus 1 in a wearing state during charging can be improved.

In some other examples, the screen 112 includes a first display control region 1121 and a second display control region 1122. The body structure 121 includes a first portion 1211 and a second portion 1212. The first portion 1211 covers at least part of the middle frame 113 circumferentially, the second portion 1212 covers one of the first display control region 1121 and the second display control region 1122, and the other one of the first display control region 1121 and the second display control region 1122 is exposed out of the mobile charging apparatus 12. The screen 112 exposed out of the mobile charging apparatus 12 may be configured to query and display simple information of time, weather, remaining power, etc., which may guarantee the assembly reliability of the mobile charging apparatus 12, and may also retain some display and control functions of the screen 112, so as to implement interaction with a user, thus helping improve the use experience of the mobile charging apparatus 12. Connection between the second portion 1212 and the first portion 1211 may form an included angle fitting the wearable apparatus body 11, and the included angle helps achieve stable fit between the mobile charging apparatus 12 and the wearable apparatus body 11. The included angle may be a right angle, or another angle adapted to a structure of the wearable apparatus body 11, which is not limited in the disclosure.

The first display control region 1121 and the second display control region 1122 each may occupy half of the display control region of the screen 112. The first display control region 1121 and the second display control region 1122 may also be distributed in other ratios such as 1:3 or 1:4, which is not limited in the disclosure. When the wearable apparatus 1 is a smart watch, the above screen 112 may be distributed by using a center of a dial as a base point. For instance, when the first display control region 1121 and the second display control region 1122 each occupy a half of the display control region of the screen 112, the first display control region 1121 may be a left half region on a left side of a diameter passing through the center of the dial, and the second display control region 1122 may be a right half region on a right side of the diameter passing through the center of the dial.

The related examples of the mobile charging apparatus 12 and its cooperation with the wearable apparatus body 11 have been described above, and types and arrangement ways of the power source 111 and the charging source 122 will be illustratively described below.

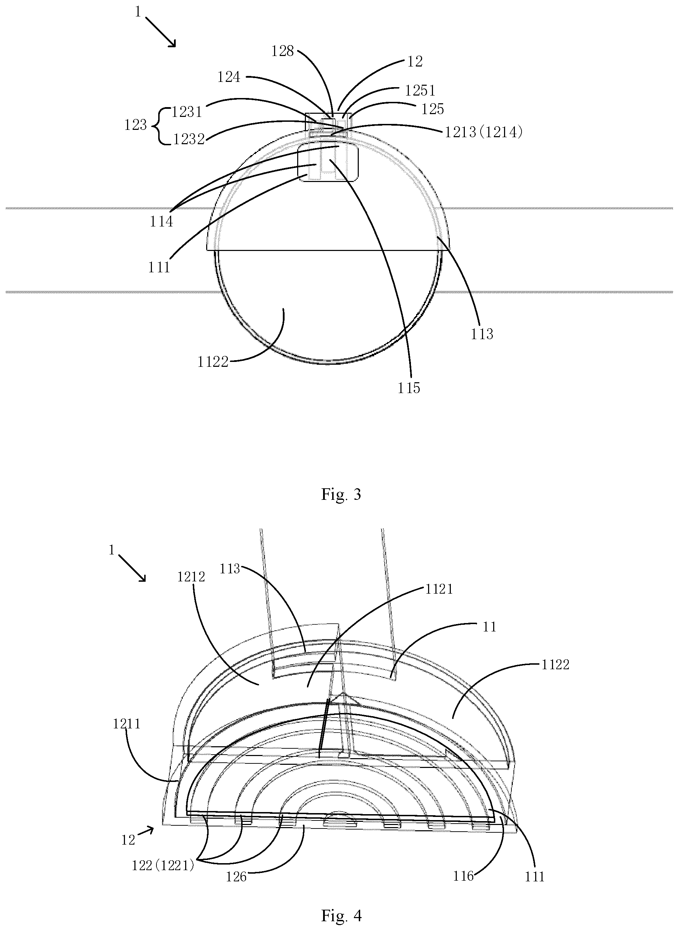

In some examples, as shown in Fig. 3, the middle frame 113 is provided with a connection contact 114 electrically connected to the power source 111, the mobile charging apparatus 12 includes a charging contact 123 electrically connected to the charging source 122. The charging contact 123 may be arranged on an inner surface 1214 of the first portion 1211, and the charging contact 123 is aligned with a connection contact 114. When the mobile charging apparatus 12 is assembled to the wearable apparatus body 11 from a side, the charging contact 123 is arranged on the first portion 1211, such that the charging contact 123 can make contact with the connection contact 114 in an assembly direction of the mobile charging apparatus 12, so as to avoid damage to the charging contact 123 or the connection contact 114 by the mobile charging apparatus 12 or the wearable apparatus body 11, and further help improve the fitting reliability of the charging contact 123 and the connection contact 114.

In the above examples, the body structure 121 may include an accommodating structure 125 protruding from an outer surface of the first portion 1211. The charging source 122 is assembled in an accommodating cavity 1251 defined by the accommodating structure 125, the inner surface 1214 includes an alignment region 1213 corresponding to a position of the accommodating cavity, and the charging contact 123 is arranged in the alignment region. The charging source 122 is assembled by means of the accommodating structure 125 protruding from the outer surface of the first portion 1211, such that interference of the thickness of the charging source 122 with the entire thickness of the first portion 1211 can be avoided, and the entire lightness and thinness of the mobile charging apparatus 12 can be improved.

It is to be noted that since the first portion 1211 and the second portion 1212 are exposed out of the wearable apparatus 1 in a wearing charging process, a charging port, an external charging connecting wire and other structures may be arranged on the first portion 1211 and/or the second portion 1212 based on structure thicknesses and size areas of the first portion 1211 and the second portion 1212.

In some examples, the above body structure 121 may include a preset region 128 adjacent to the charging contact 123, and the preset region 128 is provided with a first magnetic attraction member 124. The wearable apparatus body 11 is provided with a second magnetic attraction member 115 aligned with the first magnetic attraction member 124 in position. When the mobile charging apparatus 12 is assembled and fitted to the wearable apparatus body 11, the first magnetic attraction member 124 is fixed to the second magnetic attraction member 115 in an attracted manner. By arranging the first magnetic attraction member 124 in a preset region 128 adjacent to the charging contact 123 and attracting and fixing the first magnetic attraction member 124 to the second magnetic attraction member 115 on the wearable apparatus body 11, the contact reliability of the charging contact 123 and the connection contact 114 is improved, and the effect of assisting in fixing the mobile charging apparatus 12 can also be achieved, so as to improve the assembly reliability of the mobile charging apparatus 12.

The charging contact 123 may include a first contact 1231 and a second contact 1232, and the preset region 128 is arranged between the first contact 1231 and the second contact 1232. The first magnetic attraction member 124 is arranged between the first contact 1231 and the second contact 1232, such that the reliability of connecting the first contact 1231 and the second contact 1232 to the connection contact 114 can be ensured, and connection failure of a contact on a side away from the first magnetic attraction member 124 can be avoided.

In some examples, the mobile charging apparatus 12 may include a preset region 128 adjacent to the charging contact 123. The preset region 128 is provided with a first clamping portion 1215. The wearable apparatus body 11 is provided with a second clamping portion aligned with the first clamping portion 1215. When the mobile charging apparatus 12 is assembled and fitted to the wearable apparatus body 11, the first clamping portion 1215 is fixed to the second clamping portion in a clamping manner. By arranging the first clamping portion 1215 in a preset region 128 adjacent to the charging contact 123 and clamping the first clamping portion to the second clamping portion on the wearable apparatus body 11, the contact reliability of the charging contact 123 and the connection contact 114 is improved, and the assembly reliability of the mobile charging apparatus 12 can be further enhanced.

In some other examples, as shown in Fig. 4, the charging source 122 includes a wireless charging coil 1221 arranged on the body structure 121. The power source 111 includes a wireless power supply coil 117 arranged on the wearable apparatus body 11. When the mobile charging apparatus 12 is assembled and fitted to the wearable apparatus body 11, the wireless charging coil 1221 is fitted to the wireless power supply coil 117 in an alignment manner. The mobile charging apparatus 12 may be assembled to the wearable apparatus body 11 in a wearing state of the wearable apparatus body 11 and may achieve charging by means of the wireless charging coil, so as to avoid complex operation of taking off the wearable apparatus body 11 during charging and improve the attractiveness, waterproofness and convenience of charging operation of the wearable apparatus body 11 and the mobile charging apparatus 12, and the user experience.

In the above examples, the wearable apparatus body 11 may include a rear housing 116, and the wireless charging coil is arranged on a third portion 126 of the body structure 121 corresponding to the rear housing 116 in position. When the mobile charging apparatus 12 is assembled to the wearable apparatus body 11, the wireless charging source 122 located on the third portion 126 may be fitted to the wireless power source 111 located in an inner side of the rear housing 116 in an alignment manner, so as to charge the wireless power source 111.

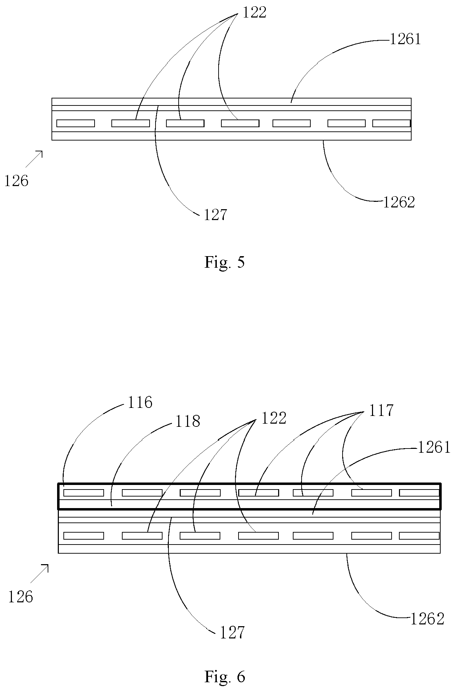

As shown in Fig. 5, a side of the third portion 126 facing the wearable apparatus body 11 is provided with a metal layer 1261, and a side of the third portion 126 facing away from the wearable apparatus body 11 is provided with a leather layer 1262. The wireless charging coil is arranged between the metal layer 1261 and the leather layer 1262. The leather layer 1262 can improve wearing quality of the mobile charging apparatus 12, and the metal layer 1261 can guarantee implementation of an inductive charging process between the wireless charging source 122 and the wireless power source 111.

In some examples, the body structure 121 includes a first portion 1211 fitted to the middle frame 113 and a second portion 1212 fitted to the screen 112, and the third portion 126 has a thickness less than or equal to that of the first portion 1211 and the second portion 1212. When the mobile charging apparatus 12 structurally includes the third portion 126, the first portion 1211 connected to the third portion 126, and the second portion 1212 arranged on the first portion 1211, the mobile charging apparatus 12 may abut against the wearable apparatus body 11 from a side face of the middle frame 113. The third portion 126 is inserted into a gap between the rear housing 116 and a wearing position in the wearing state of the wearable apparatus 1, and achieves wireless charging through aligning fit between the third portion 126 and the rear housing 116, such that a position of the wireless power source 111 in the wearable apparatus body 11 can be prevented from changing, so as to improve the adaptability of the mobile charging apparatus 12. The third portion 126 may be inserted with a thinner structural dimension into the gap between the rear housing 116 and a fitting position.

In the above examples, as shown in Fig. 6, the third portion 126 is provided with a third magnetic attraction member 127, and the rear housing 116 is provided with a fourth magnetic attraction member 118 corresponding to the third magnetic attraction member 127 in position. When the mobile charging apparatus 12 is assembled to the wearable apparatus body 11, the third magnetic attraction member 127 is fixed to the fourth magnetic attraction member 118 in an attracted manner. When the mobile charging apparatus 12 is assembled to the wearable apparatus body 11, the third magnetic attraction member 127 is fixed to the fourth magnetic attraction member 118 in an attracted manner. The attraction fixation of the third magnetic attraction member 127 and the fourth magnetic attraction member 118 can not only guarantee the aligning fitting reliability of the wireless charging coil and the wireless power supply coil 117, but also improve the reliability of connection between the mobile charging apparatus 12 and the wearable apparatus body 11.

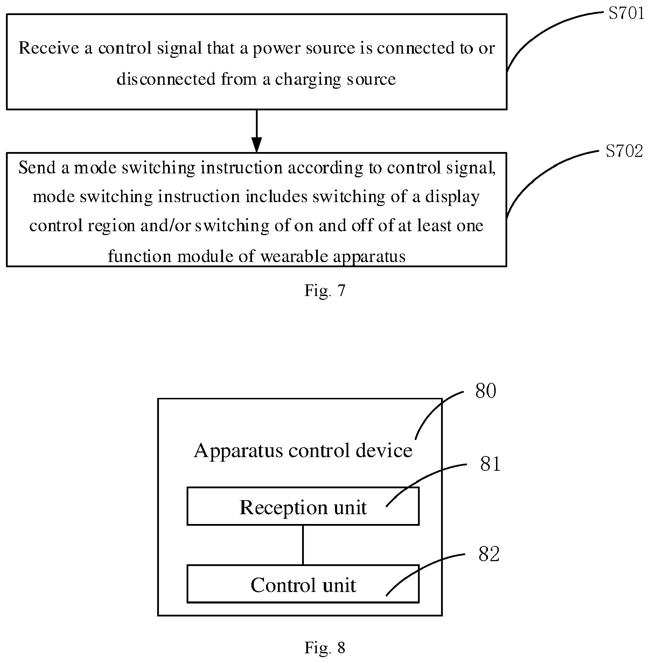

The disclosure further provides an apparatus control method, applied to the above wearable apparatus 1. Fig. 7 is a flowchart of an apparatus control method according to an example of the disclosure. As shown in Fig. 7, the above apparatus control method may be implemented by means of the following steps.

In S701, a control signal that a power source 111 is connected to or disconnected from a charging source 122 is received.

The power source 111 and the charging source 122 may be connected by means of a contact or may be connected by means of a wireless charging coil. The control signal may be implemented by detecting whether the connection contact 114 electrically connected to the power source 111 makes contact and connection with the charging contact 123, and may also be implemented by detecting whether the wireless power supply coil 117 is fitted to the wireless charging coil in an alignment manner to achieve connection. The control signal may be a connection signal of connection between the charging source 122 and the power source 111, and may also be a disconnection signal that the charging source 122 is disconnected from the power source 111, such that a main board controls the wearable apparatus body 11 to switch to a corresponding mode by means of a type of the control signal.

In S702, a mode switching instruction is sent according to the control signal, wherein the mode switching instruction includes switching of a display control region and/or switching on and off of at least one function module of the wearable apparatus 1.

The wearable apparatus body 11 may include a normal mode and a semi-interactive mode. In the normal mode, the entire display control region of the screen 112 can achieve corresponding functions, and various function modules of the wearable apparatus body 11 can work normally. In the semi-interactive mode, for instance, the second portion 1212 covers the first display control region 1121 of the screen 112, the screen 112 implements a corresponding display control function by means of the second display control region 1122, and a high-power function module of motion monitoring, etc. of the wearable apparatus body 11 may be in a switched-off state.

The mode switching instruction may be a corresponding control instruction for switching from the normal mode or other modes to the semi-interactive mode, and may also be a corresponding control instruction for switching from the semi-interactive mode to the normal mode or other modes.

The mobile charging apparatus 12 may be assembled to the wearable apparatus body 11 in a wearing state of the wearable apparatus body 11 and may achieve charging, so as to avoid complex operation of taking off the wearable apparatus body 11 during charging, and improve the convenience of charging operation and the user experience. The screen 112 exposed out of the body structure may be configured to implement a display interaction function in a semi-interactive mode, thus avoiding an influence on a function of the wearable apparatus 1.

In some examples, the apparatus control method may further include that display content is adjusted according to the mode switching instruction. The display content is associated with a display region and the started function module. For instance, when the wearable apparatus body 11 switches from the normal mode to the semi-interactive mode, the display region may be adjusted to the second display control region 1122 that is not blocked by the body structure 121, and the display content is adjusted to display content corresponding to a low power consumption function of weather, time, etc. For another instance, when the wearable apparatus body 11 switches from the semi-interactive mode to the normal mode, the display region may be switched to the full screen from the second display control region 1122 that is not blocked by the body structure 121, and the display content is adjusted to common content of motion monitoring, etc.

The disclosure further provides an apparatus control device, applied to the above wearable apparatus 1. Fig. 8 is a structural block diagram of an apparatus control device according to an example of the disclosure. As shown in Fig. 8, the apparatus control device 80 includes a reception unit 81 and a control unit 82,
the reception unit 81 is configured to receive a control signal that a power source 111 is connected to or disconnected from a charging source 122; and
the control unit 82 is configured to send a mode switching instruction according to the control signal, the mode switching instruction includes switching of a display control region and/or switching on and off of at least one function module of the wearable apparatus 1.

In some examples, the apparatus control device further includes an adjustment unit. The adjustment unit is configured to adjust display content according to the mode switching instruction.

The display content is associated with a display region and the started function module. For instance, when the wearable apparatus body 11 switches from the normal mode to the semi-interactive mode, the display region may be adjusted to the second display control region 1122 that is not blocked by the body structure 121, and the display content is adjusted to display content corresponding to a low power consumption function of weather, time, etc. For another instance, when the wearable apparatus body 11 switches from the semi-interactive mode to the normal mode, the display region may be switched to the full screen from the second display control region 1122 that is not blocked by the body structure 121, and the display content is adjusted to common content of motion monitoring, etc.

With respect to the devices in the above examples, particular ways in which the various modules execute operations have been described in detail in the examples relating to the method, and will not be described in detail here.

Since the device examples correspond to the method examples basically, reference can be made to the description of the method examples. The device examples described above are merely schematic, the units illustrated as separate components may be physically separate or not, and the components shown as units may be physical units or not, that is, may be located in one place, or may also be distributed over a plurality of network units. Some or all of the modules can be selected according to actual needs to achieve the objectives of the solutions of the disclosure. Those of ordinary skill in the art can understand and implement the present invention without making creative efforts.

Correspondingly, the disclosure further provides an apparatus control device, including: a processor; and a memory configured to store an instruction executable by the processor; wherein the processor is configured to:
receive a control signal that a power source 111 is connected to or disconnected from a charging source 122; and
send a mode switching instruction according to the control signal, the mode switching instruction includes switching of a display control region and/or switching of on and off of at least one function module of the wearable apparatus 1.

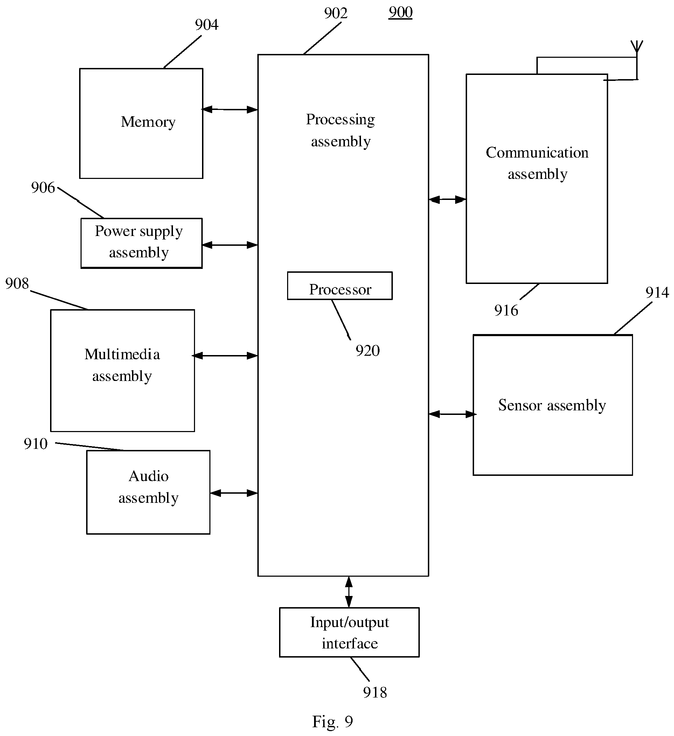

Fig. 9 is a block diagram of a device for controlling an apparatus according to an example of the disclosure. For instance, the device 900 may be a mobile phone, a computer, a digital broadcast terminal, a messaging apparatus, a gaming console, a tablet apparatus, a medical apparatus, a fitness apparatus, a personal digital assistant, etc.

With reference to Fig. 9, the device 900 may include one or more of the following assemblies: a processing assembly 902, a memory 904, a power supply assembly 906, a multimedia assembly 908, an audio assembly 910, an input/output (I/O) interface 918, a sensor assembly 914, and a communication assembly 916.

The processing assembly 902 generally controls overall operation of the device 900, for instance, operation associated with display, phone calls, data communications, camera operations, and recording operations. The processing assembly 902 may include one or more processors 920 to execute an instruction to complete all or part of the steps of the method above. Moreover, the processing assembly 902 may include one or more modules to facilitate interaction between the processing assembly 902 and other assemblies. For instance, the processing assembly 902 may include the multimedia module to facilitate interaction between the multimedia assembly 908 and the processing assembly 902.

The memory 904 is configured to store various types of data to support an operation on the device 900. Instances of such data include an instruction, operated on the device 900, for any application or method, contact data, phonebook data, messages, pictures, video, etc. The memory 904 may be implemented by any types of volatile or non-volatile memory apparatus, or their combination, for instance, a static random access memory (SRAM), an electrically erasable programmable read-only memory (EEPROM), an erasable programmable read-only memory (EPROM), a programmable read-only memory (PROM), a read-only memory (ROM), a magnetic memory, a flash memory, a magnetic disk or an optical disk.

The power supply assembly 906 supplies power to the various assemblies of the device 900. The power supply assembly 906 may include a power management system, one or more power supplies, and other assemblies associated with power generation, management, and distribution for the device 900.

The multimedia assembly 908 includes a screen that provides an output interface between the device 900 and the user. In some examples, the screen may include a liquid crystal display (LCD) and a touch panel (TP). In the case that the screen includes a touch panel, the screen may be implemented as a touch screen, so as to receive an input signal from a user. The touch panel includes one or more touch sensors to sense touches, slides, and gestures on the touch panel. The touch sensor may not only sense a boundary of a touch or slide action, but also detect duration and pressure related to the touch or slide operation. In some examples, the multimedia assembly 908 includes a front-facing camera and/or a rear-facing camera. When the device 900 is in an operational mode, for instance, a photographing mode or a video mode, the front-facing camera and/or the rear-facing camera may receive external multimedia data. Each of the front-facing camera and the rear-facing camera may be a fixed optical lens system or have a focal length and optical zoom capability.

The audio assembly 910 is configured to output and/or input audio signals. For instance, the audio assembly 910 includes a microphone (MIC) configured to receive an external audio signal when the device 900 is in the operational mode, for instance, a calling mode, a recording mode, and a speech identification mode. The received audio signal may be further stored in the memory 904 or transmitted via the communication assembly 916. In some examples, the audio assembly 910 further includes a speaker for outputting an audio signal.

The I/O interface 918 provides an interface between the processing assembly 902 and a peripheral interface module, such as a keyboard, a click wheel, a button, etc. These buttons may include, but are not limited to, a home button, a volume button, a start button, and a lock button.

The sensor assembly 914 includes one or more sensors for providing state assessments of various aspects for the device 900. For instance, the sensor assembly 914 may detect an on/off state of the device 900 and relative positioning of the assemblies. For instance, the assemblies are a display and a keypad of the device 900. The sensor assembly 914 may also detect a change in position of the device 900 or an assembly of the device 900, the presence or absence of contact between the user and the device 900, orientation or acceleration/deceleration of the device 900, and temperature variation of the device 900. The sensor assembly 914 may include a proximity sensor configured to detect the presence of a nearby object in the absence of any physical contact. The sensor assembly 914 may also include a light sensor, for instance, a complementary metal oxide semiconductor (CMOS) or charge coupled device (CCD) image sensor, for use in imaging applications. In some examples, the sensor assembly 914 may also include an acceleration sensor, a gyroscopic sensor, a magnetic sensor, a pressure sensor, or a temperature sensor.

The communication assembly 916 is configured to facilitate communication between the device 900 and other device in a wired or wireless mode. The device 900 may access a wireless network based on a communication standard, for instance, WiFi, 2G, 3G, 4G long term evolution (LTE), 5G new radio (NR) or their combination. In an example, the communication assembly 916 receives a broadcast signal or broadcast related information from an external broadcast management system by means of a broadcast channel. In an example, the communication assembly 916 also includes a near field communication (NFC) module to facilitate short-range communication. For instance, the NFC module may be implemented based on a radio frequency identification (RFID) technology, an infrared data association (IrDA) technology, an ultra wide band (UWB) technology, a Bluetooth (BT) technology, or other technologies.

In an example, the device 900 may be implemented by one or more application specific integrated circuits (ASICs), a digital signal processor (DSP), a digital signal processing device (DSPD), a programmable logic device (PLD), a field programmable gate array (FPGA), a controller, a microcontroller, a microprocessor, or other electronic elements for executing the method above.

The disclosure further provides a computer-readable storage medium, storing a computer instruction. The instruction implements the steps of the apparatus control method provided in the disclosure when executed by a processor. In an example, a non-transitory computer-readable storage medium including an instruction is further provided, for instance, a memory 904 including an instruction, and the instruction may be executed by the processor 920 of the device 900 so as to execute the apparatus control method above. For instance, the non-transitory computer-readable storage medium may be a read-only memory (ROM), a random access memory (RAM), a compact disc read-only memory (CD-ROM), a magnetic tape, a floppy disk, an optical data storage apparatus, etc.

What are described above are merely preferred examples of the disclosure and are not intended to limit the disclosure, and any modifications, equivalent replacements, improvements, etc. made within the spirit and principles of the disclosure should fall within the scope of protection of the disclosure.

## Claims

1. A mobile charging apparatus, used in cooperation with a wearable apparatus body (11), and
comprising a body structure (121) and a charging source (122) arranged on the body structure (121), wherein when the mobile charging apparatus (12) is assembled and fitted to the wearable apparatus body (11), the mobile charging apparatus (12) is detachably assembled to the wearable apparatus body (11) by means of the body structure (121), and the charging source (122) is electrically connected to a power source (111) of the wearable apparatus body (11); and
the body structure (121) covers at least part of a middle frame (113) and/or part of a screen (112) of the wearable apparatus body (11), such that at least part of the screen (112) exposed out of the body structure (121) serves as a display control interaction region, wherein the display control interaction region is at least configured to implement a preset display interaction function.

2. The mobile charging apparatus according to claim 1, wherein the body structure (121) comprises a first portion (1211) and a second portion (1212); and the first portion (1211) covers at least part of the middle frame (113) circumferentially, and the second portion (1212) covers part of the screen (112).

3. The mobile charging apparatus according to claim 2, comprising a charging contact (123) electrically connected to the charging source (111), wherein the charging contact (123) is arranged on an inner surface (1214) of the first portion (1211), and the charging contact (123) is arranged corresponding to a connection contact (114) arranged on the middle frame (113).

4. The mobile charging apparatus according to claim 3, wherein the body structure (121) comprises an accommodating structure (125) protruding from an outer surface of the first portion (1211); and the charging source (122) is assembled in an accommodating cavity (1251) defined by the accommodating structure (125), the inner surface (1214) comprises an alignment region (1213) corresponding to the accommodating cavity (1251) in position, and the charging contact (123) is arranged in the alignment region (1213).

5. The mobile charging apparatus according to claim 3 or 4, wherein the body structure (121) comprises a preset region (128) adjacent to the charging contact (123), and the preset region (128) is provided with a first magnetic attraction member (124); and when the mobile charging apparatus (12) is assembled and fitted to the wearable apparatus body (11), the first magnetic attraction member (1224) is fixed to the wearable apparatus body (11) in an attracted manner.

6. The mobile charging apparatus according to claim 5, wherein the charging contact (123) comprises a first contact (1231) and a second contact (1232), and the preset region (128) is arranged between the first contact (1231) and the second contact (1232).

7. The mobile charging apparatus according to any one of claims 3 to 6, comprising a preset region adjacent to the charging contact (123), wherein the preset region is provided with a first clamping portion (1215); and when the mobile charging apparatus (12) is assembled and fitted to the wearable apparatus body (11), the first clamping portion (1215) is fixed to the wearable apparatus body (11) in a clamping manner.

8. The mobile charging apparatus according to any one of claims 1 to 7, wherein the charging source (122) comprises a wireless charging coil (1221) arranged on the body structure (121); the power source (111) comprises a wireless power supply coil (117) arranged on the wearable apparatus body (11); and when the mobile charging apparatus (12) is assembled and fitted to the wearable apparatus body (11), the wireless charging coil (1221) is fitted to the wireless power supply coil (117) in an alignment manner.

9. The mobile charging apparatus according to claim 8, wherein the wireless charging coil (1221) is arranged in a third portion (126) of the body structure (121) corresponding to a rear housing (116) of the wearable apparatus body (11) in position;
optionally, wherein a side of the third portion (126) facing the wearable apparatus body (11) is provided with a metal layer (1261), and a side of the third portion (126) facing away from the wearable apparatus body (11) is provided with a leather layer (1262); and the wireless charging coil (1221) is arranged between the metal layer (1261) and the leather layer (1262).

10. The mobile charging apparatus according to claim 9, wherein the body structure (121) comprises a first portion (1211) fitted to the middle frame (113) and a second portion (1212) fitted to the screen (112), and the third portion (126) has a thickness less than or equal to that of the first portion (1211) and the second portion (1212).

11. The mobile charging apparatus according to claim 9 or 10, wherein the third portion (126) is provided with a third magnetic attraction member (127), and the rear housing (116) is provided with a fourth magnetic attraction member (118) corresponding to the third magnetic attraction member (127) in position; and when the mobile charging apparatus (12) is assembled to the wearable apparatus body (11), the third magnetic attraction member (127) is fixed to the fourth magnetic attraction member (118) in an attracted manner.

12. A wearable apparatus, comprising a wearable apparatus body (11) and the mobile charging apparatus (12) according to any one of claims 1-11, wherein the mobile charging apparatus (12) is detachably assembled to the wearable apparatus body (11) by means of a body structure (121); and the wearable apparatus body (11) comprises a power source (111), and a charging source (121) is electrically connected to the power source (111), wherein optionally the wearable apparatus body (11) comprises a screen (112), and the screen (112) comprises a first display control region (1121) and a second display control region (1122); and the body structure (121) covers one of the first display control region (1121) and the second display control region (1122), and the other one of the first display control region (1121) and the second display control region (1122) is exposed out of the mobile charging apparatus (12).

13. An apparatus control method, applied to the wearable apparatus according to claim 12, and comprising:
receiving (S701) a control signal that a power source (111) is connected to or disconnected from a charging source (122); and
sending (S702) a mode switching instruction according to the control signal, wherein the mode switching instruction comprises switching of a display control region and/or switching on and off of at least one function module of the wearable apparatus.

14. The apparatus control method according to claim 13, further comprising:
adjusting display content according to the mode switching instruction, wherein the display content is associated with a display region and the started function module.

15. A computer-readable storage medium, storing a computer instruction, wherein the instruction implements the apparatus control method according to claim 13 or 14 when executed by a processor.
